# EUROPEAN PATENT SPECIFICATION

(11) **EP 4 342 774 B1**
(45) Date of publication and mention of the grant of the patent: **05.11.2025**
(21) Application number: 23199497.1
(22) Date of filing: 25.09.2023
(51) Int. Cl.: B62H 3/00

(54) **STACKABLE BICYCLE RACK**
STAPELBARER FAHRRADTRÄGER
PORTE-BICYCLETTES EMPILABLE

(30) Priority: 26.09.2022 NL 2033147
(43) Date of publication of application: 27.03.2024
(73) Proprietor: Kooymans Beheer BV, 4285 BE Woudrichem (NL)
(72) Inventor: KOOIJMANS, Antonius Gerardus Petrus Johannes, 4285 BG Woudrichem (NL)
(74) Representative: Verhees, Godefridus Josephus Maria

(56) References cited:
- DE-A1- 102008 013 535
- US-A- 4 022 325
- US-A1- 2016 144 912

## Description

### Technical field of the invention

The invention relates to a bicycle rack comprising two feet for placement on a surface as well as at least one upright bicycle leaning rack that is provided with two ends, one of the ends is attached to one of the feet and the other end is attached to the other foot.

### Background of the invention

Such a bicycle rack is generally known. By attaching a number of bicycle leaning racks to common feet, the bicycle leaning racks are stable without having to be anchored in the ground and the bicycle racks can easily be moved and transported to locations where they serve temporarily. This makes such bicycle racks suitable for rental, for example for use at events

Examples of such bicycle racks are found in documents DE 10 2008 013535 A1, disclosing a bicycle rack in the preamble of claim 1; US 2016/144912 A1 and US 4 022 325 A.

### Summary of the invention

It is an object of the present invention to provide a bicycle rack of the type defined in the opening paragraph that is more suitable for rental than the known bicycle racks. To this end, the feet of the bicycle rack according to the invention each comprise an elongated strip bent in width direction and the bicycle leaning rack comprises at least two elongated strips that are also bent in the width direction and are connected to each other directly or via a connecting strip. the bicycle rack according to the invention is characterized in that the strip of each foot has a recess that extends from one of the longitudinal edges of this strip, and in that the limiting edge of this recess is attached to one of the strips of the bicycle leaning rack. This construction of the bicycle rack makes such bicycle racks stackable and therefore more bicycle racks can be placed on a transport vehicle. This reduces transport costs and transport time considerably, making such bicycle racks more suitable for rental.

The transverse edges at the ends of the strips of the bicycle leaning rack can be perpendicular to the longitudinal direction of the strips. In that case, the ends of the bicycle leaning rack protrude through the recesses in the foot strips. With bicycle leaning racks stacked on top of each other, the lower ends of the strips of the bicycle leaning racks then rest on the top of the strips of the feet so that the stacked bicycle racks are at some distance from each other. Preferably, the ends of the strips of the bicycle leaning racks are bevelled/rounded so that the transverse edge of the end of the strip of the bicycle leaning racks is attached to the limiting edge of the recess. This allows the strips of the feet and the bicycle leaning racks of stacked bicycle racks to lie against each other, so that the bicycle racks stacked on top of each other take up even less space.

An embodiment of the bicycle rack according to the invention is characterized in that the longitudinal edges of the strips of the feet are present in one straight plane and that, seen in a side view of the bicycle rack, the strips of the bicycle leaning rack are at an angle between 0 and 90 degrees with the straight plane and slope towards each other. This makes the bicycle racks easy to stack. The angle is preferably a maximum of 85 degrees to ensure better stackability and preferably the angle is greater than 45 degrees to obtain sufficient height. The strips of the bicycle rack are preferably straight in the longitudinal direction.

A further embodiment of the bicycle rack according to the invention is characterized in that the connecting strip is also bent in the width direction and is attached with the transverse edges to the other transverse edges of the other end of the strips of the bicycle leaning rack.

The strips can be bent in transverse direction, for example in the shape of a quarter circle. Preferably, however, each strip is bent along a fold line extending in the length of the strip. Such a strip has the form of a generally common corner profile that is easily available, making it cheap to manufacture a bicycle rack composed solely or mainly of corner profiles.

Yet another embodiment of the bicycle rack according to the invention is characterized in that at least one of the strips is provided with a spacer on one of the sides of the strip. As a result, the strips of bicycle fences stacked on top of each other do not lie against each other but are a short distance from each other, making it easier to take the bicycle fences apart.

### Brief description of the drawings

The invention will be explained in more detail below on the basis of an exemplary embodiment of the bicycle rack according to the invention shown in the drawings. Hereby shows:
Figure 1 an embodiment of the bicycle rack in perspective;
Figure 2 the bicycle rack in side view with a bicycle placed against it;
Figure 3 the bicycle rack in side view;
Figure 4 the bicycle rack in section along line V-V in figure 3;
Figure 5 a number of bicycle racks stacked on top of each other; and
Figure 6 a detail of the feet of the stacked bicycle racks.

### Detailed description of the drawings

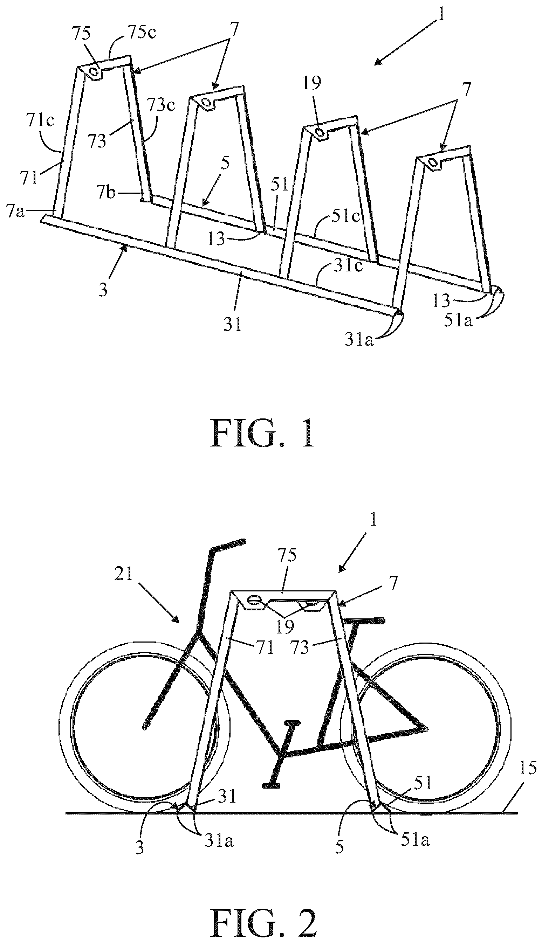

Figure 1 shows an embodiment of the bicycle rack 1 according to the invention in perspective. The bicycle rack 1 has two feet 3 and 5 for placement on a surface as well as a number of upright bicycle leaning racks 7 which with their ends 7a and 7b are attached to the feet 3 and 5. The feet 3 and 5 are each formed from a straight, elongated strip 31, 51 which is bent at right angles along a fold line 31c, 35c extending along the length of the strip.

Each bicycle leaning rack 7 consists of two elongated strips 71, 73 that are connected to each other via a connecting strip 75. These strips and connecting strip are also bent at right angles along fold lines 71c, 73c, 75c extending along the length of the strips. The connecting strip 75 is provided with protruding lips in which tie-down holes 19 are present. This construction of the bicycle rack 1 makes the bicycle rack stackable, so that less space is required for transporting a large number of bicycle racks.

By way of illustration, figure 2 shows the bicycle rack in side view with a bicycle 21 leaning against it. The distance between the feet 3 and 5 is such that the feet always fit between the wheels of a bicycle. The bicycle leaning rack 7 is sufficiently high that even large bicycles can lean with their frames against it.

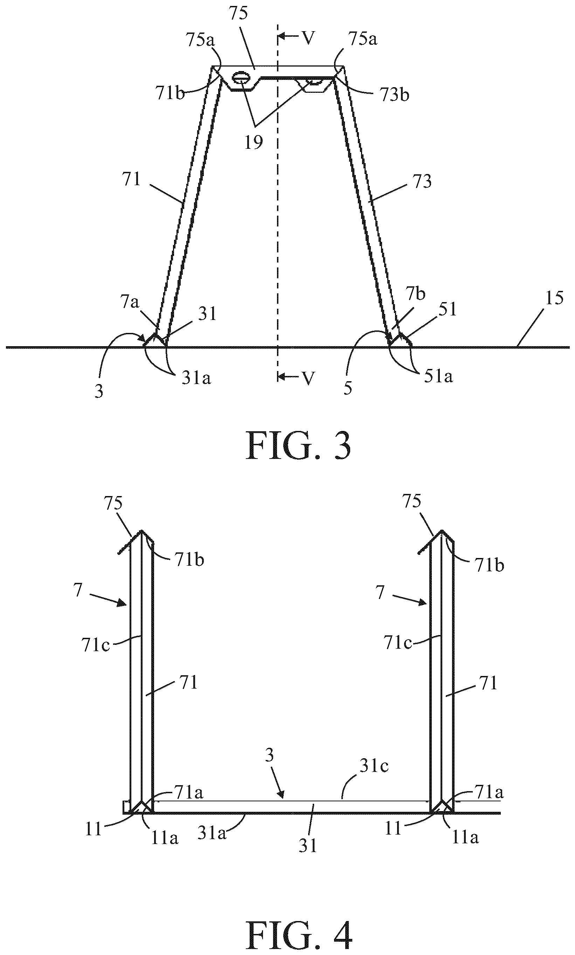

The longitudinal edges 31a and 51a of the strips 31 and 51 of the feet 3 and 5 are present in one straight plane 15, see figure 3 in which the bicycle rack 1 is shown in side view. The strips 71, 73 of the bicycle leaning rack 7 are at an angle 17 between 45 and 85 degrees with the straight plane 15 and slope towards each other.

Figure 4 shows the bicycle rack in cross-section along the line V-V indicated in Figure 3. In the strip 31, 51 of each foot 3, 5 there is a recess 11, 13 (see also figure 7) which extends from one of the longitudinal edges 31a, 51a of the strip 31, 51. The limiting edge 11a, 13a of this recess 11, 13 is attached to the transverse edge 71a, 73a of the end of the strip 71, 73 of the bicycle leaning rack 7. The connecting strip 75 is attached with its transverse edges 75a (see figure 3) to the other transverse edges 71b and 73b of the other end of the strips 71 and 73 of the bicycle leaning rack 7.

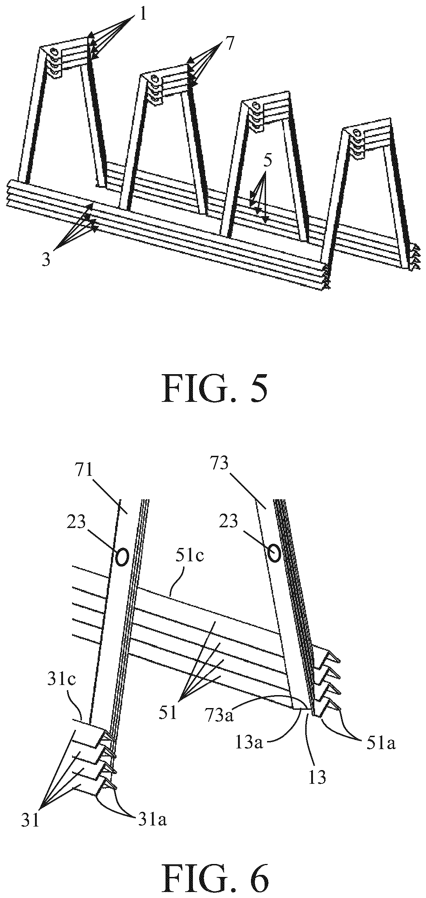

Figure 5 shows a number of bicycle racks stacked on top of each other and figure 6 shows a detail of this at the location of the feet. By providing the inside of the strips 71 and 73 (and/or of the strips 31 and 51 and/or 75) with studs 23 on the outward and/or inward side, the strips of the various bicycle racks do not rest against each other, but they are at a small distance from each other. This makes it easier to take the bicycle gates apart.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Bicycle rack (1) comprising two feet (3, 5) for placement on a surface as well as at least one upright bicycle leaning rack (7) that is provided with two ends (7a, 7b), one of the ends (7a) is attached to one of the feet (3) and the other end (7b) is attached to the other foot (5), the feet (3, 5) each comprise an elongated strip (31, 51) bent in width direction and that the bicycle leaning rack (7) comprises at least two elongated strips (71, 73) that are also bent in the width direction and that are connected to each other directly or via a connecting strip (75), **characterized in that** the strip (31, 51) of each foot (3, 5) has a recess (11, 13) that extends from one of the longitudinal edges (31a, 51a) of this strip (31, 51), and that the limiting edge (11a, 13a) of this recess (11, 13) is attached to one of the strips (71, 73) of the bicycle leaning rack (7).

2. Bicycle rack (1) according to claim 1, **characterized in that** the limiting edge (11a, 13a) of the recess (11, 13) is attached to the transverse edge (71a, 73a) of the end of the strip (71, 73) of the bicycle leaning rack (7).

3. Bicycle rack (1) according to claim 1 or 2, **characterized in that** the longitudinal edges (31a, 51a) of the strips (31, 51) of the feet (3, 5) are in one straight plane (15) and that, seen in a side view of the bicycle rack (1), the strips (71, 73) of the bicycle leaning rack (7) are at an angle (17) between 0 and 90 degrees with the straight plane (15) and slope towards each other.

4. Bicycle rack (1) according to claim 3, **characterized in that**, seen in side view of the bicycle rack (1) the strips (71, 73) of the bicycle leaning rack (7) are at an angle (17) between 45 and 85 degrees with the straight plane (15).

5. Bicycle rack (1) according to claim 4, **characterized in that** the connecting strip (75) is also bent in the width direction and is attached with the transverse edges (75a) to the other transverse edges (71b, 73b) of the other end of the strips (71, 73) of the bicycle leaning rack (7).

6. Bicycle rack (1) according to any one of the preceding claims, **characterized in that** each strip (31, 35, 71, 73, 75) is bent along a fold line (31c, 35c, 71c, 73c, 75c) extending in longitudinal direction of the strip.

7. Bicycle rack (1) according to any one of the preceding claims, **characterized in that** at least one of the strips (31, 35, 71, 73, 75) is provided with a spacer (23) on one of the sides of the strip.

## Patentansprüche

1. Fahrradständer (1) mit zwei Füßen (3, 5) zum Aufstellen auf einer Fläche sowie mindestens einem aufrecht stehenden Fahrradständer (7) mit zwei Enden (7a, 7b), wobei ein Ende (7a) an einem der Füße (3) und das andere Ende (7b) am anderen Fuß (5) befestigt ist, wobei die Füße (3, 5) jeweils aus einem länglichen, in Breitenrichtung gebogenen Streifen (31, 51) bestehen, und der Fahrradständer (7) aus mindestens zwei ebenfalls in Breitenrichtung gebogenen länglichen Streifen (71, 73) besteht, die direkt oder über einen Verbindungsstreifen (75) miteinander verbunden sind, wobei der Streifen (31, 51) jedes Fußes (3, 5) eine Aussparung (11, 13) aufweist, die sich von einer seiner Längskanten (31a, 51a) aus erstreckt, und die Begrenzungskante (11a, 13a) dieser Aussparung (11, 13) an einer der Leisten (71, 73) des Fahrradständers (7) befestigt ist.

2. Fahrradständer (1) nach Anspruch 1, **dadurch gekennzeichnet, dass** die Begrenzungskante (11a, 13a) der Aussparung (11, 13) an der Querkante (71a, 73a) des Endes der Leiste (71, 73) des Fahrradständers (7) befestigt ist.

3. Fahrradständer (1) nach Anspruch 1 oder 2, **dadurch gekennzeichnet, dass** die Längskanten (31a, 51a) der Leisten (31, 51) der Füße (3, 5) in einer geraden Ebene (15) liegen und dass die Leisten (71, 73) des Fahrradständers (7) in Seitenansicht des Fahrradständers (1) einen Winkel (17) zwischen 0 und 90 Grad zur geraden Ebene (15) bilden und aufeinander zu geneigt sind.

4. Fahrradständer (1) nach Anspruch 3, **dadurch gekennzeichnet, dass** die Leisten (71, 73) des Fahrradständers (7) in Seitenansicht des Fahrradständers (1) einen Winkel (17) zwischen 45 und 85 Grad zur geraden Ebene (15) bilden.

5. Fahrradständer (1) nach Anspruch 4, **dadurch gekennzeichnet, dass** der Verbindungsstreifen (75) ebenfalls in Breitenrichtung gebogen ist und mit den Querkanten (75a) an den anderen Querkanten (71b, 73b) des anderen Endes der Streifen (71, 73) des Fahrradständers (7) befestigt ist.

6. Fahrradständer (1) nach einem der vorhergehenden Ansprüche, **dadurch gekennzeichnet, dass** jeder Streifen (31, 35, 71, 73, 75) entlang einer in Streifenlängsrichtung verlaufenden Faltlinie (31c, 35c, 71c, 73c, 75c) gebogen ist.

7. Fahrradständer (1) nach einem der vorhergehenden Ansprüche, **dadurch gekennzeichnet, dass** mindestens einer der Streifen (31, 35, 71, 73, 75) an einer seiner Seiten mit einem Abstandshalter (23) versehen ist.

## Revendications

1. Porte-vélos (1) comprenant deux pieds (3, 5) destinés à être posés sur une surface, ainsi qu'au moins un support vertical (7) pour vélos, pourvu de deux extrémités (7a, 7b), l'une (7a) étant fixée à l'un des pieds (3) et l'autre (7b) à l'autre pied (5), les pieds (3, 5) comprennent chacun une bande allongée (31, 51) courbée dans le sens de la largeur, le support (7) pour vélos comprend au moins deux bandes allongées (71, 73) également courbées dans le sens de la largeur, reliées entre elles directement ou par une bande de liaison (75), ce support est **caractérisé en ce que** la bande (31, 51) de chaque pied (3, 5) présente un évidement (11, 13) s'étendant depuis l'un de ses bords longitudinaux (31a, 51a), et **en ce que** le bord de délimitation (11a, 13a) de cet évidement (11, 13) est fixé à l'une des bandes (71, 73) du porte-vélos (7).

2. Porte-vélos (1) selon la revendication 1, **caractérisé en ce que** le bord de délimitation (11a, 13a) de l'évidement (11, 13) est fixé au bord transversal (71a, 73a) de l'extrémité de la bande (71, 73) du porte-vélos (7).

3. Porte-vélos (1) selon la revendication 1 ou 2, **caractérisé en ce que** les bords longitudinaux (31a, 51a) des bandes (31, 51) des pieds (3, 5) forment un plan rectiligne (15) et que, vues de côté du porte-vélos (1), les bandes (71, 73) du support de vélo (7) forment un angle (17) compris entre 0 et 90 degrés avec le plan rectiligne (15) et sont inclinées l'une vers l'autre.

4. Porte-vélos (1) selon la revendication 3, **caractérisé en ce que**, vues de côté du porte-vélos (1), les bandes (71, 73) du support de vélo (7) forment un angle (17) compris entre 45 et 85 degrés avec le plan rectiligne (15).

5. Porte-vélos (1) selon la revendication 4, **caractérisé en ce que** la bande de liaison (75) est également courbée dans le sens de la largeur et est fixée par ses bords transversaux (75a) aux autres bords transversaux (71b, 73b) de l'autre extrémité des bandes (71, 73) du porte-vélos (7).

6. Porte-vélos (1) selon l'une quelconque des revendications précédentes, **caractérisé en ce que** chaque bande (31, 35, 71, 73, 75) est courbée le long d'une ligne de pliage (31c, 35c, 71c, 73c, 75c) s'étendant dans le sens longitudinal de la bande.

7. Porte-vélos (1) selon l'une quelconque des revendications précédentes, **caractérisé en ce qu'**au moins une des bandes (31, 35, 71, 73, 75) est munie d'une entretoise (23) sur l'un de ses côtés.
